## Europäisches Patentamt

## European Patent Office

## Office européen des brevets

(19)

(11) Veröffentlichungsnummer: **0 220 358**
**B1**

(12) **EUROPÄISCHE PATENTSCHRIFT**

(45) Veröffentlichungstag der Patentschrift:
**05.04.89**

(21) Anmeldenummer: **86100816.7**

(22) Anmeldetag: **22.01.86**

(51) Int. Cl.⁴: **F16K 11/078**

(54) **Sanitäres Ventil.**

(30) Priorität: **13.07.85 DE 3525053**

(43) Veröffentlichungstag der Anmeldung:
**06.05.87 Patentblatt 87/19**

(45) Bekanntmachung des Hinweises auf die Patenterteilung:
**05.04.89 Patentblatt 89/14**

(84) Benannte Vertragsstaaten:
**AT BE CH DE FR GB IT LI LU NL SE**

(56) Entgegenhaltungen:
**DE-A- 2 737 479**
**DE-A- 2 756 784**
**FR-A- 2 397 579**
**GB-A- 2 110 340**
**US-A- 3 794 074**
**US-A- 4 327 758**

(73) Patentinhaber: **IDEAL-STANDARD GMBH, Euskirchener Strasse 80, D-5300 Bonn 1(DE)**

(72) Erfinder: **Bergmann, Konrad, Dr. Dipl.-Ing., Zur Philippsburg 70, D-5560 Wittlich(DE)**

(74) Vertreter: **Gesthuysen, Hans Dieter, Dipl.-Ing. et al, Patentanwälte Gesthuysen + von Rohr Huyssenallee 15 Postfach 10 13 33, D-4300 Essen 1(DE)**

ACTORUM AG

## Beschreibung

Die Erfindung betrifft ein sanitäres Wasserventil mit mindestens zwei Steuerelementen, von denen ein erstes Steuerelement als feststehender Ventilsitz ausgebildet und mit einer Wasserzuführung oder mehreren Wasserzuführungen verbunden ist und von denen ein zweites Steuerelement beweglich, nämlich auf dem ersten Steuerelement verschieblich ist, wobei die einander zugewandten Flächen der Steuerelemente als Dichtflächen ausgebildet sind (vgl. die US-A 4 327 758).

Die bekannten sanitären Wasserventile, von denen die Erfindung ausgeht, sind in der Regel mit scheibenförmigen Steuerelementen aus einem keramischen Material versehen und haben sich in der Praxis bewährt. Nachteilig bei den bisher bekannten sanitären Wasserventilen ist, daß die scheibenförmigen Steuerelemente relativ große Dichtflächen aufweisen, was gleichbedeutend ist mit relativ großen Baumaßen. Hinzu kommt, daß man relativ große hydraulische Anpreßflächen auf der Unterseite des als feststehender Ventilsitz ausgebildeten Steuerelementes benötigt, um die Steuerelemente zusammenzuhalten. Ferner sind die Wasserventile so ausgebildet, daß jeder Strömungsöffnung in dem als feststehender Ventilsitz ausgebildeten Steuerelement nur genau eine einzige Steueröffnung oder Steuerkante für die Weiterleitung des Wassers zugeordnet ist. Das hat zur Folge, daß trotz der großen Baumaße die Durchflußraten vergleichsweise klein sind. Schließlich ist noch von Nachteil, daß die relativ großen Dichtflächen, die ihrerseits auch relativ große Anpreßflächen erforderlich machen, entsprechende Reibungskräfte verursacht.

Der Erfindung liegt die Aufgabe zugrunde, die zuvor aufgezeigten Nachteile der bekannten gattungsgemäßen Wasserventile zu beseitigen und ein gattungsgemäßes sanitäres Wasserventil zu schaffen, das einfach im Aufbau und sicher in der Wirkungsweise ist sowie trotz kleiner Baumaße große Durchflußraten aufweist.

Das erfindungsgemäße sanitäre Wasserventil, bei dem die zuvor aufgezeigte Aufgabe gelöst ist, ist zunächst und im wesentlichen dadurch gekennzeichnet, daß die Steuerelemente zumindest teilweise ringförmig gestaltet sind und relativ schmale Dichtflächen aufweisen und daß im geöffneten Zustand des Wasserventils die Dichtflächen teilweise aufeinander liegen und teilweise nicht miteinander in Kontakt stehen, derart, daß zwei Steuerkanten gebildet werden.

Bei einer bevorzugten Ausführungsform des erfindungsgemäßen Wasserventils sind drei übereinanderliegende Steuerelemente vorgesehen, nämlich ein erstes äußeres feststehendes Steuerelement und ein zweites äußeres feststehendes Steuerelement sowie ein mittleres bewegliches Steuerelement, ist das zweite äußere feststehende Steuerelement mit einer Umlenkkammer versehen, steht das zweite äußere feststehende Steuerelement permanent unter dem Zuleitungsdruck und führt das bewegliche Steuerelement im geschlossenen Zustand und im geöffneten Zustand des Wasserventils das Wasser bzw. Teilmengen des Wassers gegen das zweite äußere feststehende Steuerelement.

Es gibt nun eine Vielzahl von Möglichkeiten, das erfindungsgemäße Wasserventil auszugestalten und weiterzubilden, was in weiteren Patentansprüchen gekennzeichnet ist und im folgenden anhand einer lediglich Ausführungsbeispiele darstellenden Zeichnung weiter erläutert wird; es zeigen

Fig. 1 in einem Längsschnitt und nur schematisch, ein erstes Ausführungsbeispiel eines erfindungsgemäßen Wasserventils mit drei Steuerelementen,

Fig. 2 wiederum in einem Längsschnitt, ein zweites Ausführungsbeispiel eines erfindungsgemäßen Wasserventils mit drei Steuerelementen, und zwar als Eingriff-Mischbatterie, und

Fig 3 in einer Explosionszeichnung, die drei Steuerelemente des Wasserventils nach Fig. 2.

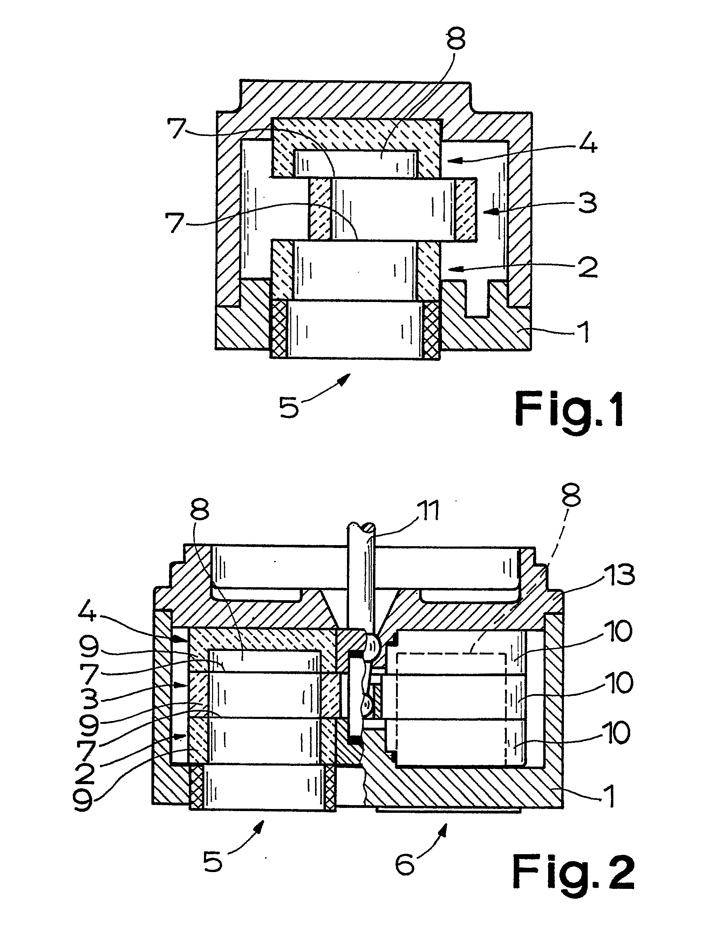

Zu den in den Fig. 1 und 2 dargestellten Wasserventilen gehören zunächst jeweils ein Ventilgehäuse 1 und jeweils drei übereinanderliegende Steuerelemente 2, 3 und 4, nämlich ein erstes äußeres Steuerelement 2, ein mittleres Steuerelement 3 und ein zweites äußeres Steuerelement 4. Das erste äußere Steuerelement 2 ist als feststehender Ventilsitz ausgebildet und mit einer Wasserzuführung 5 (Ausführungsbeispiel nach Fig. 1) bzw. mit zwei Wasserzuführungen 5 und 6 (Ausführungsbeispiel nach Fig. 2) verbunden. Das mittlere Steuerelement 3 ist beweglich, nämlich gegenüber den äußeren Steuerelementen 2 und 4 verschieblich. Die einander zugewandten Flächen der Steuerelemente 2, 3 und 4 sind als Dichtflächen 7 ausgebildet. In den beiden in den Fig. 1 und 2 dargestellten Ausführungsbeispielen gilt für das zweite äußere feststehende Steuerelement 4, daß dieses Steuerelement 4 mit einer Umlenkkammer 8 versehen ist und permanent unter dem Zuleitungsdruck steht, und führt das bewegliche Steuerelement 3 im geschlossenen Zustand und im geöffneten Zustand des Wasserventils das Wasser bzw. Teilmengen des Wassers gegen das zweite äußere feststehende Steuerelement 4.

Im Ausführungsbeispiel nach Fig. 2 weisen die drei Steuerelemente 2, 3 und 4 für die anteilige Steuerung des kalten Wassers und des warmen Wassers je zwei ringförmige Teile 9, 10 auf, greift an das mittlere bewegliche Steuerelement 3 ein das zweite äußere feststehende Steuerelement 4 durchgreifender Steuerhebel 11 an und ist das mittlere Steuerelement 3 mittels des Steuerhebels 11 verschieblich. Bei diesem Ausführungsbeispiel ist für die Abdichtung des Steuerhebels 11 nach außen der Steuerhebel 11 von ringförmigen Dichtflächen 12 umgeben und stehen die ringförmigen Dichtflächen 12 ständig in abdichtendem Kontakt zueinander.

In den beiden in den Fig. 1 und 2 dargestellten Ausführungsbeispielen eines erfindungsgemäßen sanitären Wasserventils sind die Steuerelemente 2, 3 und 4 einstückig aus einem keramischen Material gebildet, vorzugsweise aus Aluminiumoxid.

Im übrigen zeigt die Fig. 2, daß dem Ventilgehäuse 1 ein Deckel 13 zugeordnet ist, der von dem Steuerhebel 11 durchgriffen ist. Wie bereits ausgeführt, durchgreift der Steuerhebel 11 das zweite äußere feststehende Steuerelement 4, um an das mittlere Steuerelement 3 angreifen zu können. Im einzelnen sind das zweite äußere feststehende Steuerelement 4 mit einer Öffnung 14 und das mittlere bewegliche Steuerelement 3 mit einer Öffnung 15 versehen, wobei in die Öffnung 15 des mittleren Steuerelementes 3 ein Gleitbuchse 16 eingesetzt ist.

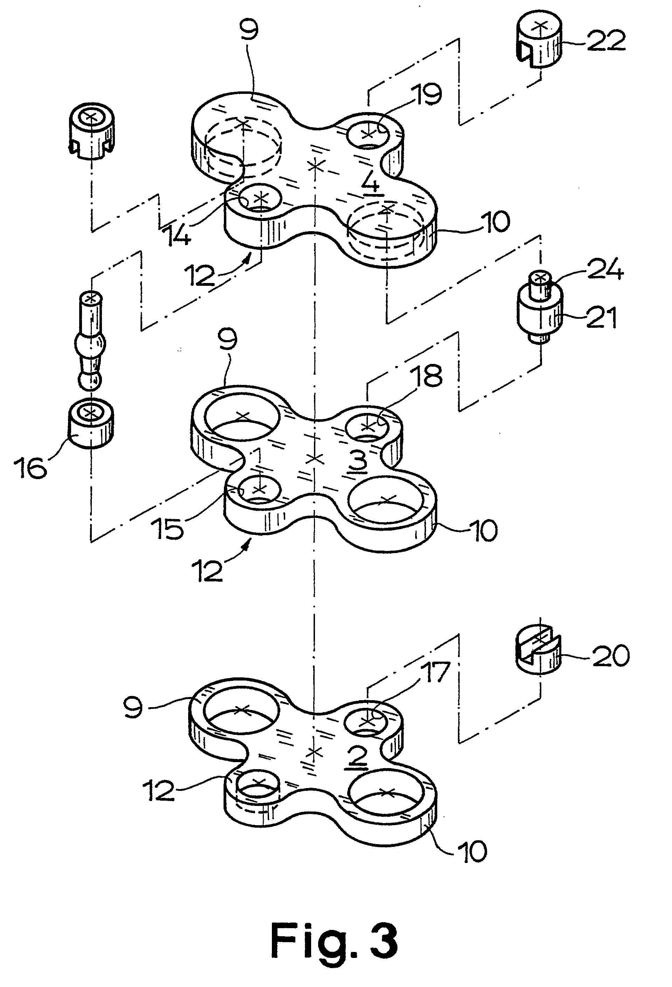

Im übrigen kann der Fig. 3 entnommen werden, daß die Steuerelemente 2, 3 und 4 exakt zueinander positioniert und geführt sind, und zwar durch in weitere Öffnungen 17, 18, 19 der Steuerelemente 2, 3, 4 vorgesehene Gleitbuchsen 20, 21, 22, in denen ein Führungs- und Verbindungszapfen 24 lagert, um den das mittlere Steuerelement 3 drehbeweglich ist.

Wie bereits erwähnt, zeigen die Figuren nur Ausführungsbeispiele eines erfindungsgemäßen Wasserventils. Das erfindungsgemäße Wasserventil kann insbesondere als Absperrventil für kaltes oder warmes Wasser ausgeführt sein wie in Fig. 1 dargestellt, wobei die Steuerelemente 2, 3 und 4 jeweils nur eine Öffnung für den Durchtritt des kalten Wassers bzw. des warmen Wassers haben. Im übrigen ist es auch ohne weiteres möglich, neben einem als feststehender Ventilsitz ausgebildeten Steuerelement nur ein weiteres Steuerelement vorzusehen, welches dann beispielsweise eine Umlenkkammer aufweist.

## Patentansprüche

1. Sanitäres Wasserventil mit mindestens zwei Steuerelementen (2, 3, 4), von denen ein erstes Steuerelement (2) als feststehender Ventilsitz ausgebildet und mit einer Wasserzuführung (5) oder mehreren Wasserzuführungen (5, 6) verbunden ist und von denen ein zweites Steuerelement (3) beweglich, nämlich auf dem ersten Steuerelement (2) verschieblich ist, wobei die einander zugewandten Flächen der Steuerelemente als Dichtflächen (7) ausgebildet sind, dadurch gekennzeichnet, daß die Steuerelemente (2, 3, 4) zumindest teilweise ringförmig gestaltet sind und relativ schmale Dichtflächen (7) aufweisen und daß im geöffneten Zustand des Wasserventils die Dichtflächen (7) teilweise aufeinander liegen und teilweise nicht miteinander in Kontakt stehen, derart, daß zwei Steuerkanten gebildet werden.

2. Sanitäres Wasserventil nach Anspruch 1 dadurch gekennzeichnet, daß drei übereinanderliegende Steuerelemente (2, 3, 4) vorgesehen sind, nämlich ein erstes äußeres feststehendes Steuerelement (2) und ein zweites äußeres feststehendes Steuerelement (4) sowie ein mittleres bewegliches Steuerelement (3), daß das zweite äußere feststehende Steuerelement (4) mit einer Umlenkkammer (8) versehen ist und permanent unter dem Zuleitungsdruck steht und daß das bewegliche Steuerelement (3) im geschlossenen Zustand und im geöffneten Zustand des Wasserventils das Wasser bzw. Teilmengen des Wassers gegen das zweite äußere feststehende Steuerelement (4) führt.

3. Sanitäres Wasserventil nach Anspruch 1 und 2, dadurch gekennzeichnet, daß die drei Steuerelemente (2, 3, 4) für die anteilige Steuerung des kalten Wassers und des warmen Wassers je ringförmige Teile (9, 10) aufweisen, daß an das mittlere Steuerelement (3) ein das zweite äußere feststehende Steuerelement (4) durchgreifender Steuerhebel (11) angreift und daß das mittlere Steuerelement (3) mittels des Steuerhebels (11) verschieblich ist.

4. Sanitäres Wasserventil nach Anspruch 3, dadurch gekennzeichnet, daß für die Abdichtung des Steuerhebels (11) nach außen der Steuerhebel (11) von ringförmigen Dichtflächen (12) umgeben ist und die ringförmigen Dichtflächen (12) ständig in abdichtendem Kontakt zueinander stehen.

## Claims

1. A sanitary water valve with at least two control elements (2, 3, 4), of which a first control element (2) is constructed as a stationary valve seating and is connected to a water supply (5) or to several water supplies (5, 6), and of which a second control element (3) is movable, namely slidable on the first control element (2), in which the surfaces of the control elements that face one another are constructed as sealing surfaces (7), characterized in that the control elements (2, 3, 4) are at least partly ring shaped and possess relatively narrow sealing surfaces (7), and that, in the open position of the water valve, parts of the sealing surfaces (7) lie against one another and parts are not in contact with one another, in such a way that two control edges are formed.

2. A sanitary water valve according to Claim 1, characterized in that three superimposed control elements (2, 3, 4) are provided, namely a first, stationary outer control element (2), a second, stationary outer control element (4) and a movable, central control element (3), that the second, stationary outer control element (4) is provided with a deflection chamber (8) and is permanently subjected to the supply pressure and that in the closed position and the open position of the water valve the movable control element (3) directs the water or portions of the water against the second, stationary outer control element (4).

3. A sanitary water valve according to Claims 1 and 2, characterized in that the three control elements (2, 3, 4) each possess two ring-shaped portions (9, 10) for the proportional control of cold water and hot water, that a control lever (11), passing through the second stationary outer control element (4), engages the central control element (3) and that the central control element (3) is slidable by means of the control lever (11).

4. A sanitary water valve according to Claim 3, characterized in that the control lever (11) is surrounded by ring-shaped sealing surfaces (12) to seal it externally and the ring-shaped sealing surfaces (12) are permanently in sealing contact with one another.

## Revendications

1. Soupape d'eau pour installation sanitaire comportant au moins deux éléments de commande (2, 3, 4), dont un premier (2) est réalisé sous forme d'un siège de soupape fixe et est à une (5) ou plusieurs (5, 6) conduites d'alimentation d'eau, et dont un deuxième (3) est mobile, en pouvant notamment se déplacer sur le premier élément de commande (2), les surfaces des éléments de commande, tournées l'une vers l'autre, étant réalisées sous forme de surfaces d'étanchement (7), caractérisée en ce que les éléments de commande (2, 3, 4) sont, au moins en partie, réalisés sous forme annulaire et présentent des surfaces d'étanchement (7) relativement étroites, et en ce que, dans la position ouverte de la soupape d'eau, les surfaces d'étanchement se trouvent en partie superposées et, en partie, sans contact l'une avec l'autre, formant ainsi deux arêtes de commande.

2. Soupape d'eau pour installation sanitaire selon la revendication 1, caractérisée en ce qu'on prévoit trois éléments de commande (2, 3, 4) se superposant, à savoir un premier élément fixe extérieur de commande (2) et un deuxième élément fixe extérieur de commande (4) ainsi qu'un élément mobile central de commande (3), et en ce que le deuxième élément fixe extérieur de commande (4) est muni d'une chambre de déviation (8), tout en restant de façon permanente soumis à la pression de la conduite d'alimentation, tandis que l'élément mobile de commande (3), en position fermée et ouverte de la soupape d'eau, amène l'eau, ou des quantités partielles d'eau contre le deuxième élément fixe extérieur de commande (4).

3. Soupape d'eau pour installation sanitaire selon les revendications 1 et 2, caractérisée en ce que les trois éléments de commande (2, 3, 4), pour la commande partielle de l'eau froide et de l'eau chaude, présentent chacun deux éléments annulaires (9, 10), en ce qu'un levier de commande (11), traversant le deuxième élément fixe extérieur de commande (4), vient s'engager sur l'élément central de commande (3) et en ce que ce dernier peut se déplacer au moyen du levier de commande (11).

4. Soupape d'eau pour installation sanitaire selon la revendication 3, caractérisée en ce que, pour l'étanchement du levier de commande (11) vers l'extérieur, celui-ci est entouré de surfaces d'étanchement annulaires (12), lesquelles sont constamment maintenues en contact d'étanchement mutuel.

**Fig.1**

**Fig.2**

EP 0 220 358 B1

Fig. 3